# EUROPÄISCHE PATENTSCHRIFT

(11) **EP 2 909 669 B1**
(45) Veröffentlichungstag und Bekanntmachung des Hinweises auf die Patenterteilung: **01.11.2023**
(21) Anmeldenummer: 13798551.1
(22) Anmeldetag: 27.09.2013
(51) Int. Cl.: G02B 21/00, G02B 21/16, G02B 21/36

(54) **MIKROSKOP UND EIN VERFAHREN ZUR UNTERSUCHUNG EINER PROBE MIT EINEM MIKROSKOP**
MICROSCOPE AND A METHOD FOR EXAMINING A SAMPLE USING A MICROSCOPE
MICROSCOPE ET PROCÉDÉ POUR ANALYSER UN ÉCHANTILLON AU MOYEN D'UN MICROSCOPE

(30) Priorität: 19.10.2012 DE 102012219136
(43) Veröffentlichungstag der Anmeldung: 26.08.2015
(73) Patentinhaber: Leica Microsystems CMS GmbH, 35578 Wetzlar (DE)
(72) Erfinder: SCHREIBER, Frank, 69221 Dossenheim (DE); KUSCHEL, Lioba, 68259 Mannheim (DE); MRAWEK, Patric, 67435 Neustadt (DE); WIDZGOWSKI, Bernd, 69221 Dossenheim (DE)
(74) Vertreter: Schaumburg und Partner Patentanwälte mbB
(86) Internationale Anmeldenummer: PCT/DE2013/200195
(87) Internationale Veröffentlichungsnummer: WO 2014/059983

(56) Entgegenhaltungen:
- EP-A1- 1 308 715
- EP-A1- 1 669 789
- EP-A2- 1 202 050
- EP-A2- 2 253 983
- WO-A1-2004/113987
- US-A1- 2005 230 610

## Beschreibung

Die vorliegende Erfindung betrifft ein Mikroskop, insbesondere Konfokalmikroskop, mit einem oder mehreren Lasern zur Erzeugung eines Beleuchtungslichts für eine Probe und einer Detektionseinrichtung für Detektionssignale von der Probe, wobei die Detektionseinrichtung mehrere zur Detektion vorgebbarer unterschiedlicher Wellenlängenbereiche einstellbare spektrale Detektionskanäle aufweist. Des Weiteren betrifft die vorliegende Erfindung ein Verfahren zur Untersuchung einer Probe mit einem Mikroskop, insbesondere Konfokalmikroskop, wobei das Mikroskop einen oder mehrere Laser zur Erzeugung eines Beleuchtungslichts für eine Probe und eine Detektionseinrichtung für Detektionssignale von der Probe aufweist und wobei die Detektionseinrichtung mehrere zur Detektion vorgebbarer unterschiedlicher Wellenlängenbereiche einstellbare spektrale Detektionskanäle aufweist.

Mikroskope der eingangs genannten Art und Verfahren zur Untersuchung einer Probe mit einem derartigen Mikroskop sind aus der Praxis bekannt und existieren in unterschiedlichsten Ausführungsformen. Beispielsweise werden bei der konfokalen Laser-Mikroskopie üblicherweise biologische Proben mit Farbstoffen markiert. Dabei werden häufig unterschiedliche Organellen mit unterschiedlichen Farbstoffen markiert. Diese Farbstoffe werden mit einem mittels eines Lasers oder mittels mehrerer Laser erzeugten Beleuchtungslicht zum Leuchten angeregt. Falls mehrere Farbstoffe in der Probe vorhanden sind, werden diese meist durch eine Wellenlängenseparation in der Detektionseinrichtung auf unterschiedlichen Bildkanälen dargestellt. Die entsprechenden Detektionssignale durchlaufen dabei Detektionskanäle, die zur Detektion vorgebbarer unterschiedlicher Wellenlängenbereiche einstellbar oder ausgebildet sind.

Häufig überlappen sich die Emissionsspektren der Farbstoffe. Außerdem fällt meist das reflektierte Anregungslicht in die Emissionsspektren der Farbstoffe. Auch Phänomene wie Autofluoreszenz, second harmonic generation oder resonanter Energietransfer können über eine reine Wellenlängenseparation nicht von den "normalen" Fluoreszenzphotonen unterschieden werden. Da diese Phänomene entweder zusätzliche Informationen über die Probe bereitstellen oder das reine Fluoreszenzbild störend überlagern, ist es wünschenswert, diese Phänomene in der Detektion vom eigentlichen Fluoreszenzsignal trennen zu können.

Bei beispielsweise konfokalen Laser-Mikroskopen wird das Fluoreszenzlicht vor der Detektion häufig chromatisch aufgespalten. Dies wird entweder über eine Kaskade optischer Strahlteiler, über ein Prisma oder über eine Anordnung mit einem Gitter realisiert. Nach der spektralen Aufspaltung trifft das Licht auf unterschiedliche Detektoren zur Bildung unterschiedlicher Detektionskanäle. Jedem Detektor oder Detektionskanal ist somit ein bestimmter Wellenlängenbereich zugeordnet.

Des Weiteren sind für Messungen von Fluoreszenzlebensdauern zwei Verfahren bekannt. Das erste Verfahren ist eine Einzelphotonenzählung, wobei zu jedem Photon die Zeit zwischen Anregung und Detektionssignal gemessen wird. Es wird dabei eine Statistik über sehr viele Einzelmessungen erstellt. Ziel ist es hierbei, die Zerfallskurve und damit die Lebensdauer von Farbstoffmolekülen zu ermitteln. Wegen der hohen erforderlichen Datenmengen erfolgt die Auswertung meist offline. Eine grobe Abschätzung der Lebensdauern ist jedoch auch online durch Mittelung der gemessenen Einzelwerte möglich.

Ein zweites bekanntes Verfahren zur Messung von Fluoreszenzlebensdauern bilden die sogenannten Gating-Verfahren, bei denen die Photonen in vor der Messung festgelegte Zeitfenster einsortiert werden. Wie bei der Einzelphotonenmessung wird dabei eine Statistik erstellt, um nach der Messung die Lebensdauer der Farbstoffe berechnen zu können. Die bekannten Gating-Verfahren führen pro Gating-Fenster jeweils eine Messung durch.

EP 2 253 983 A2 offenbart ein Mikroskop nach dem Oberbegriff des Anspruchs 1. Das aus EP 2 253 983 A2 bekannte Mikroskop ist ausgebildet, eine zeitliche Veränderung von Fluoreszenzaktivität in einer biologischen Probe mittels eines Multianodenphotomultipliers zu verfolgen. Das Mikroskop umfasst ferner eine Speichereinheit, die ausgebildet ist Messergebnisse, insbesondere gemessene Spektren, der biologischen Probe in voreingestellten Zeitabständen zu speichern.

WO 2004/113987 A1 offenbart ein Verfahren in der Fluoreszenzmikroskopie. Zu Beginn des aus WO 2004/113987 A1 bekannten Verfahrens werden mittels eines Timeseries Dialogs durch eine Bedienperson Start und Ende einer Zeitserie sowie Intervalle und Abstände zwischen Aufnahmen eines Fluoreszenzmikroskops vorbestimmt.

EP 1 308 715 A1 offenbart ein Verfahren in der Fluoreszenzmikroskopie, bei dem ein spektrale Verteilungen (sogenannte λ-Stacks) für jeweils einen Bildpunkt zusammen mit einem Messzeitpunkt gespeichert werden.

EP 1 202 050 A2 offenbart ein Verfahren zur Multi-Fluoreszenz-Detektion.

Bei den bekannten Mikroskopen und Verfahren zur Untersuchung einer Probe ist problematisch, dass viele Phänomene, die Informationen über die Probe transportieren, bei der Detektion nicht erkannt werden können. Oftmals werden Detektionssignale dieser Phänomene ungenutzt unterdrückt oder zumindest reduziert, so dass sie keine Störung bei der Messung anderer Phänomene mehr verursachen können. Letztendlich erfolgt hier eine Verschwendung möglicherweise nutzbarer Detektionssignale.

Der vorliegenden Erfindung liegt daher die Aufgabe zugrunde, ein Mikroskop und ein Verfahren zur Untersuchung einer Probe mit einem Mikroskop der eingangs genannten Art anzugeben, wonach eine besonders vielseitige Anwendung unter Berücksichtigung unterschiedlichster Phänomene bei besonders guter Trennung der Phänomene bei der Untersuchung ermöglicht ist.

Erfindungsgemäß wird die voranstehende Aufgabe durch ein Mikroskop mit den Merkmalen des Anspruchs 1 sowie durch ein Verfahren zur Untersuchung einer Probe mit einem Mikroskop mit den Merkmalen des Anspruchs 8 gelöst. Danach ist das Mikroskop dadurch gekennzeichnet, dass bei den spektralen Detektionskanälen jeweils mehrere zeitliche Detektionsfenster einstellbar sind, und ist das Verfahren dadurch gekennzeichnet, dass bei den spektralen Detektionskanälen jeweils mehrere zeitliche Detektionsfenster einstellbar sind und somit Detektionssignale in den zeitlichen Detektionsfenstern aufgenommen werden.

In erfindungsgemäßer Weise ist zunächst erkannt worden, dass es durch eine geschickte Konstruktion und Durchführung eines Messverfahrens möglich ist, unterschiedlichste Phänomene während einer Probenuntersuchung voneinander zu trennen und auszuwerten. Hierzu sind in konkreter Weise bei den spektralen Detektionskanälen jeweils mehrere zeitliche Detektionsfenster einstellbar, wobei dann Detektionssignale in den einstellbaren zeitlichen Detektionsfenstern aufgenommen werden können. Folglich wird hierbei die zeitliche Abhängigkeit der Detektionssignale berücksichtigt, beispielsweise sehr schnell auftretendes Reflexionslicht und üblicherweise erst später auftretendes Fluoreszenzlicht. Durch eine diesbezüglich vorgenommene zeitliche Trennung mittels der zeitlichen Detektionsfenster ist eine gegenseitige Störung der Reflexionssignale und der Fluoreszenzsignale weitestgehend vermieden. Beide Phänomene können somit unabhängig voneinander untersucht und ausgewertet werden. Mit dem erfindungsgemäßen Mikroskop und dem erfindungsgemäßen Verfahren ist somit ein dynamisches Zusammenspiel zwischen Wellenlängenselektion und Selektion des detektierten Zeitfensters und somit beispielsweise eine Optimierung des Bildkontrasts möglich. Des Weiteren wird es durch die Kombination beider Selektionsverfahren - Wellenlänge und zeitliches Detektionsfenster - möglich, zusätzliche Informationen in beispielsweise der konfokalen Bildgebung zu generieren. Insbesondere kann der Anwender über die Bildgebung sofort ein visuelles Feedback erhalten und kann gegebenenfalls noch während einer Messung die Einstellungen der Detektionskanäle und der Detektionsfenster optimieren.

Folglich ist mit dem erfindungsgemäßen Mikroskop und dem erfindungsgemäßen Verfahren zur Untersuchung einer Probe eine besonders vielseitige Anwendung unter Berücksichtigung unterschiedlichster Phänomene bei besonders guter Trennung der Phänomene während einer Untersuchung ermöglicht.

Im Konkreten könnten die Wellenlängenbereiche der spektralen Detektionskanäle während einer Messung einstellbar und/oder darstellbar sein. Hierdurch ist eine Optimierung der Messeinstellungen an den jeweiligen Anwendungsfall ermöglicht. Dabei könnte ein visuelles Feedback mittels Bildgebung hilfreich sein. Alternativ oder zusätzlich hierzu könnten die zeitlichen Detektionsfenster während einer Messung einstellbar und/oder darstellbar sein. Auch hierdurch ist eine Anpassung an vorhandene Messsituationen zur Optimierung beispielsweise eines Bildkontrasts ermöglicht. Eine bildhafte Darstellung vereinfacht die Messung und macht sie komfortabler.

Bei einer weiter vorteilhaften Ausgestaltung könnten die Wellenlängenbereiche eine unterschiedliche Größe aufweisen. Auch hierdurch ist eine Optimierung der Messbedingungen im Hinblick auf den jeweiligen Anwendungsfall ermöglicht. Je nach Anwendungsfall könnten die Wellenlängenbereiche auch gleich groß sein. Alternativ oder zusätzlich hierzu könnten die zeitlichen Detektionsfenster jeweils eine unterschiedliche Größe aufweisen. Hierdurch ist eine Anpassung an individuelle zeitliche Verläufe von Detektionssignalen ermöglicht.

Im Hinblick auf eine besonders komfortable und vielseitige Auswertung der Detektionssignale könnte jedem spektralen Detektionskanal eine separate Auswerteelektronik oder ein separater Auswertekanal zugeordnet sein. Alternativ hierzu könnten jedem spektralen Detektionskanal mehrere separate Auswertekanäle zugeordnet sein, um die Auswertung besonders flexibel an individuelle Versuchssituationen anpassen zu können. In weiter flexibler Weise könnten dabei jedem Auswertekanal ein zeitliches Detektionsfenster oder mehrere zeitliche Detektionsfenster zugeordnet sein.

Eine Auswertung der aufzunehmenden Detektionssignale könnte dabei je nach Anwendungsfall parallel oder seriell erfolgen. Im Falle mehrerer einem spektralen Detektionskanal zugeordneter separater Auswertekanäle ist eine parallele Auswertung möglich, wobei weiterhin jedem Auswertekanal eine vorgebbare Anzahl an Detektionsfenstern zugeordnet sein könnte. Im Falle eines einzelnen Auswertekanals könnte eine serielle Auswertung der aufzunehmenden Detektionssignale erfolgen, wobei hier jeweils ein Detektionsfenster nach dem anderen auszuwerten wäre.

In weiter vorteilhafter Weise könnte die Auswertung in der Auswerteelektronik, in dem Auswertekanal oder in den Auswertekanälen durch mit den zeitlichen Detektionsfenstern zeitlich korrelierende Steuersignale aktiviert oder deaktiviert werden. Im Falle der Aktivierung der Auswertung durch die Steuersignale findet eine Auswertung ab dem Erhalt des Steuersignals statt. Im Falle der Deaktivierung findet eine Auswertung ab Erhalt des Steuersignals nicht mehr statt. Je nach Anwendungsfall kann der geeignete Steuerungsprozess gewählt werden, einmal gemäß Aktivierungs-Modus und einmal gemäß Deaktivierungs-Modus.

In weiter vorteilhafter Weise könnten zwei oder mehrere zeitliche Detektionsfenster während oder nach einer Datenaufnahme miteinander verrechenbar sein. Vorzugsweise könnten die Ergebnisse dieser Verrechnung darstellbar sein, beispielsweise durch eine Ausgabe auf einem Display.

In weiter vorteilhafter Weise könnten unterschiedlichen zeitlichen Detektionsfenstern unterschiedliche Laser zuordenbar sein. Insoweit könnte beispielsweise jedem zeitlichen Detektionsfenster oder auch Gruppen von zeitlichen Detektionsfenstern jeweils unterschiedliche Laser zuordenbar sein. Auch könnte einem einzelnen zeitlichen Detektionsfenster oder einer Gruppe von zeitlichen Detektionsfenstern jeweils mehrere Laser zuordenbar sein. Hierbei ist der jeweilige Anwendungsfall zu berücksichtigen.

In entsprechender Weise könnten bei einem in geeigneter Weise ausgestalteten Verfahren zur Untersuchung einer Probe mit dem Mikroskop in vorteilhafter Weise zwei oder mehrere zeitliche Detektionsfenster während oder nach der Datenaufnahme miteinander verrechnet werden und dann vorzugsweise die Ergebnisse der Verrechnung dargestellt werden. In gleicher Weise könnten bei einem geeigneten Verfahren unterschiedlichen zeitlichen Detektionsfenstern unterschiedliche Laser zugeordnet werden.

Im Falle einer seriellen Auswertung könnte bei jedem Deaktivieren des Steuersignals am Ende eines zeitlichen Detektionsfensters ein Adresszähler inkrementiert werden. Dies ermöglicht eine getrennte Darstellung der einzelnen Zeitabschnitte während der Bildaufnahme. Die ausgewertete Bildinformation für jeden Zeitabschnitt bzw. jedes zeitliche Detektionsfenster könnte sich durch die Inkrementierung des Adresszählers in einer eigenen Speicherzelle befinden. Sollen nun bei der seriellen Auswertung mehrere Zeitabschnitte bzw. Detektionsfenster zusammengefasst werden, wie es schon mit einer parallelen Auswertung einfach möglich ist, könnte dies durch nachträgliche Verrechnung der Inhalte der zugehörigen Speicherzellen auch bei der seriellen Auswertung leicht erreicht werden.

Auch bei einer derartigen seriellen Auswertung könnte sich eine Invertierung der Auswertung realisieren lassen, die die gezielte Unterdrückung bestimmter Zeitabschnitte des Bildsignals erlaubt. Hierzu könnte jede eine ausgewertete Bildinformation eines zeitlichen Detektionsfensters enthaltende Speicherzelle mit einer individuell vorgebbaren Markierung versehen werden. Diese Markierung erlaubt in der nachträglichen Auswertung, den Inhalt dieses Zeitabschnitts oder Detektionsfensters vom Gesamtbild zu subtrahieren.

Bei einer weiter vorteilhaften Art der Auswertung könnte eine Auswertung der aufzunehmenden Detektionssignale mittels einer Track-and-Hold-Schaltung erfolgen, wobei mit jedem Start eines Gating-Pulses eines Datenakkumulation gestartet werden könnte.

Zum Erhalt aussagekräftiger Daten mit den aufgezeigten Verfahren ist es sinnvoll, einerseits Daten mit einer hohen Wiederholrate aufzunehmen und andererseits eine hohe zeitliche Auflösung zu erreichen. Dabei sind Wiederholraten von 80 MHz günstig. Beide genannten Anforderungen lassen sich in besonders vorteilhafter Weise mit einem Designansatz in einem FPGA (Field-Programmable Gate Array) oder in einem ASIC (Application-Specific Integrated Circuit) umsetzen, wobei die Kombination aus einem FPGA/ASIC und möglichst wenigen extrem schnellen Einzelbausteinen zur Abtastung bzw. Datenaufnahme besonders günstig ist.

Zusammenfassend darf festgehalten werden, dass die Bildgebung der konfokalen Lasermikroskopie eine zeitliche Abhängigkeit der Detektionssignale bislang nicht berücksichtigt. Viele Phänomene, die Informationen über eine Probe transportieren, können daher in der Detektion nicht erkannt werden. Des Weiteren haben die existierenden Verfahren zur Messung von zeitlichen Phänomenen in der Fluoreszenzmikroskopie ausschließlich zum Ziel, die Lebensdauer der Farbstoffmoleküle möglichst exakt quantitativ zu bestimmen. Eine Anpassung von Parametern während der Messung ist dabei des Weiteren nicht vorgesehen. Insbesondere ist ein dynamisches Zusammenspiel zwischen Wellenlängenselektion und Selektion des detektierten Zeitfensters bei den bekannten Verfahren nicht möglich.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele der Erfindung anhand der Zeichnung zu verweisen. In Verbindung mit der Erläuterung bevorzugter Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung eine erfindungsgemäße Ausgestaltung von Detektionskanälen und zugeordneten zeitlichen Detektionsfenstern,
- Fig. 2: in einer schematischen Darstellung mit unterschiedlichen Detektionsfenstern und unterschiedlichen Detektionskanälen mit einer Ausgestaltung nach Fig. 1 aufgenommene Bilddaten,
- Fig. 3: in einem Diagramm ein Ausführungsbeispiel einer Anordnung von drei Auswertekanälen für eine parallele Auswertung,
- Fig. 4: in einer schematischen Darstellung eine parallele Auswertung,
- Fig. 5: in einem Diagramm die zeitliche Abfolge von Detektionsfenstern bei einer seriellen Auswertung,
- Fig. 6: in einer schematischen Darstellung eine serielle Auswertung,
- Fig. 7: in einer schematischen Darstellung eine Track-and-Hold-Schaltung.
- Fig. 8a: in einer schematischen Darstellung den Bezug von Detektionsfenstern unterschiedlicher Detektoren zu einem Laser,
- Fig. 8b: in einer schematischen Darstellung den Bezug von Detektionsfenstern unterschiedlicher Detektoren zu verschiedenen Lasern,
- Fig. 8c: in einer schematischen Darstellung den Bezug von Detektionsfenstern eines Detektors zu verschiedenen Lasern,
- Fig. 8d: in einer schematischen Darstellung die Entfernung von Kreuzsignalen durch sequentielle Bildaufnahme auf einem Pixel und
- Fig. 8e: in einer schematischen Darstellung die Nutzung von Kreuzsignalen bei einer sequentiellen Bildaufnahme auf einem Pixel zur Datenauswertung.

Bei einem Ausführungsbeispiel der vorliegenden Erfindung wird als zusätzliche Eigenschaft der detektierten Photonen die Zeit bzw. das Zeitfenster nach der Anregung eines Farbstoffs bis zum Auftreffen der erzeugten Photonen auf den Detektor genutzt. Da sich beispielsweise Reflexion, Autofluoreszenz und Fluoreszenz in dieser Eigenschaft unterscheiden, wird es hierdurch möglich, diese in der Detektion voneinander zu trennen.

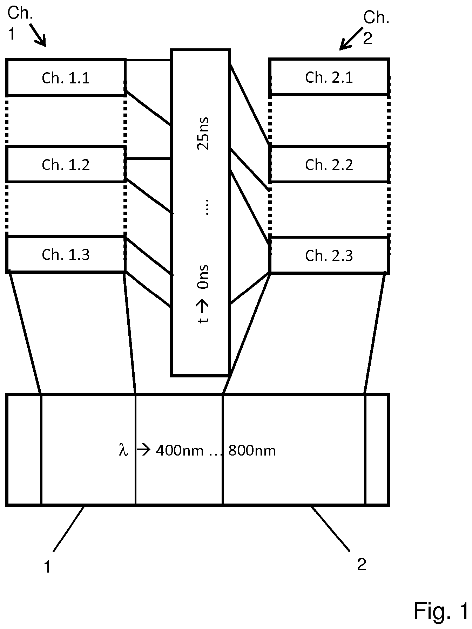

Bei dem vorliegenden Ausführungsbeispiel wird das zeitliche Detektionsfenster bei der Bildgebung der konfokalen Lasermikroskopie neben dem Detektionswellenlängenbereich als zweites Kriterium für die Separation von Detektionssignalen eingeführt. Fig. 1 zeigt hierzu in einer schematischen Darstellung eine Einstellmöglichkeit für zwei Detektionskanäle Ch.1 und Ch.2 in einem User Interface. Dabei sind sowohl die Anzahl der Wellenlängenbereiche 1 und 2 als auch die Anzahl der zeitlichen Detektionsfenster Ch.1.1, Ch.1.2 und Ch.1.3 bzw. Ch.2.1, Ch.2.2 und Ch.2.3 der Übersichtlichkeit halber in Fig. 1 auf zwei Wellenlängenbereiche bzw. drei zeitliche Detektionsfenster pro Wellenlängenbereich bzw. Detektionskanal begrenzt. Es können jedoch deutlich mehr Wellenlängenbereiche und zeitliche Detektionsfenster eingestellt werden.

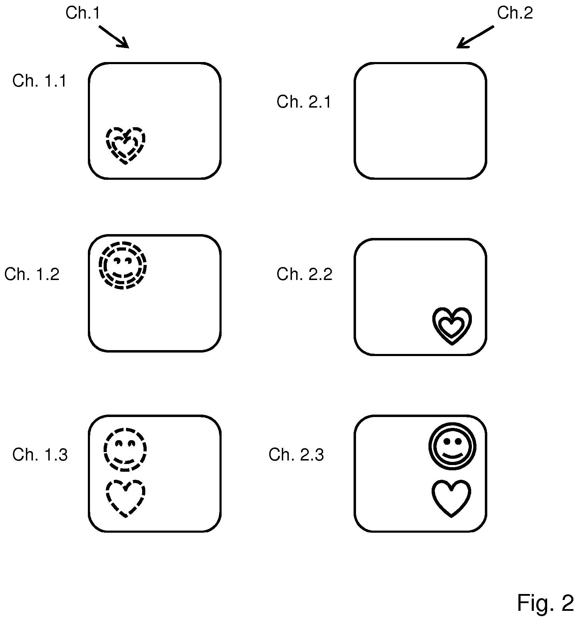

Gemäß Fig. 2 könnte sich eine Bildgebung bei dem in Fig. 1 beschriebenen Ausführungsbeispiel wie folgt darstellen: Ch.1 empfängt nur grünes Licht - gestrichelte Ränder - und Ch.2 detektiert nur rotes Licht - Ränder mit durchgezogener Linie. Die einfachen Ränder der Symbole in den Detektionsfenstern repräsentieren in diesem Beispiel das sehr früh auftreffende reflektierte Licht, wie dies in Ch.1.3 und Ch.2.3 dargestellt ist. Die Symbole mit doppelten Rändern repräsentieren das Fluoreszenzsignal. Beispielhaft ist hierbei dargestellt, dass es sich bei dem Herz um eine langlebige Fluoreszenz handelt, wogegen es sich bei dem Gesicht um eine kurzlebige Fluoreszenz handelt.

In der Fluoreszenzmikroskopie sind beispielsweise die folgenden praktischen Anwendungen möglich, wobei es sich hier um eine nicht abschließende Aufzählung handelt.

Es könnte eine Trennung von Fluoreszenzlicht und Reflexionslicht erfolgen. Dabei ist eine simultane Darstellung der Detektionskanäle mit sich überlagernden Wellenlängenbereichen in zwei oder mehr Detektionskanälen realisierbar. Zum einen kann sich Reflexionslicht störend auf die Bildgebung des Fluoreszenzlichts auswirken. Zum anderen kann das reine Reflexionsbild weitere Informationen zum Beispiel über die Position und Lage von optischen Grenzflächen bereitstellen. Ein reines Unterdrücken des Reflexionssignals ließe diese Informationen verloren gehen.

Ein weiterer Anwendungsbereich könnte die Trennung von Second Harmonic Generation und MP Fluoreszenz darstellen. Dabei ist das SHG-Signal genau wie die Reflexion ein extrem schnelles Signal und kann damit leicht zeitlich von der Fluoreszenz separiert werden. Im Gegensatz hierzu kann eine reine spektrale Trennung schwierig oder unmöglich sein, und zwar insbesondere dann, wenn sich die Emissionswellenlänge der Fluoreszenz mit der Wellenlänge der SHG überlappt. Insbesondere wenn es sich um Proben handelt, die leicht ausbleichen, oder um Proben, die sich schnell bewegen, hat es Vorteile, wenn der Anwender SHG und Fluoreszenzsignale simultan detektieren kann und nicht auf zwei Messvorgänge angewiesen ist.

Des Weiteren bildet einen Anwendungsfall die Trennung von Autofluoreszenz und Fluoreszenz. Autofluoreszenz tritt häufig bei Pflanzenpräparaten auf. Dabei sind die Lebensdauer und die Wellenlänge der Autofluoreszenz sehr unterschiedlich. Als zusätzliches Kriterium kann das zeitliche Detektionsfenster eine Separation von Fluoreszenz und Autofluoreszenz leichter machen.

Grundsätzlich ist es denkbar, dass zwei oder mehrere zeitliche Detektionsfenster oder Detektionskanäle während (online) oder nach (offline) der Datenaufnahme miteinander verrechnet werden können, und vorzugsweise die Ergebnisse der Verrechnung dargestellt werden können. Ein Beispiel könnte die FRET-Darstellung sein. Bei FRET zeigt sich häufig nur ein schwacher Abfall der Donor-Fluoreszenz bei gleichzeitiger Verkürzung der Lebensdauer, während sich beim Akzeptor ein leichter Anstieg der Intensität bei gleichzeitig flacherer Anstiegsflanke zeigt. Wird nun die Intensität der langlebigen Fluoreszenz des Donors durch die kurzlebige Intensität des Akzeptors geteilt, so stellt dies ein empfindlicheres Messverfahren als über reine Intensitätsmessungen oder reine Lebensdauermessungen dar. Andere Applikationen, bei denen zeitliche Detektionsfenster oder Detektionskanäle subtrahiert, addiert, multipliziert und/oder beliebig miteinander verrechnet werden können, sind denkbar.

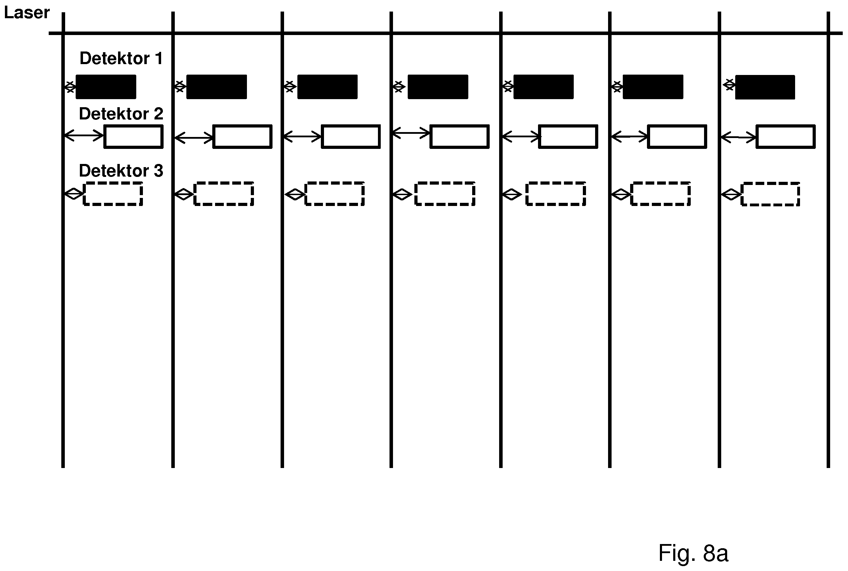

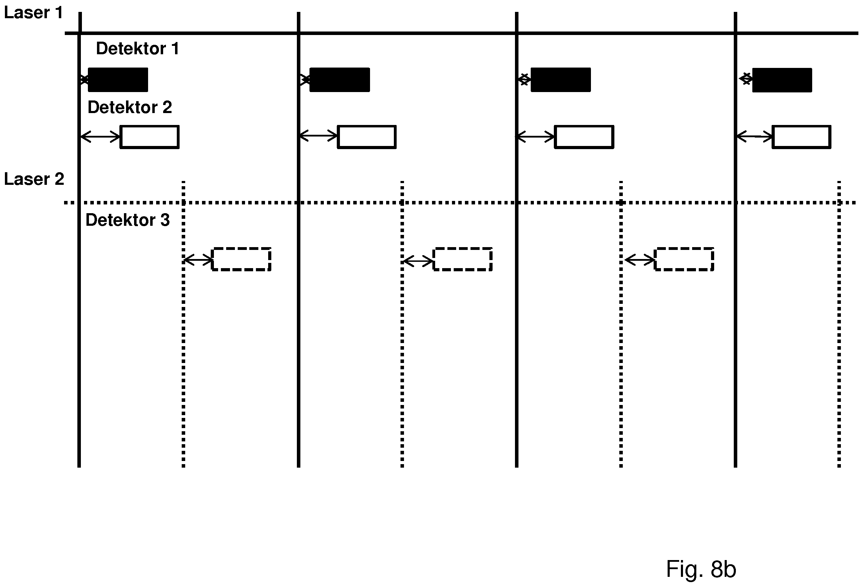

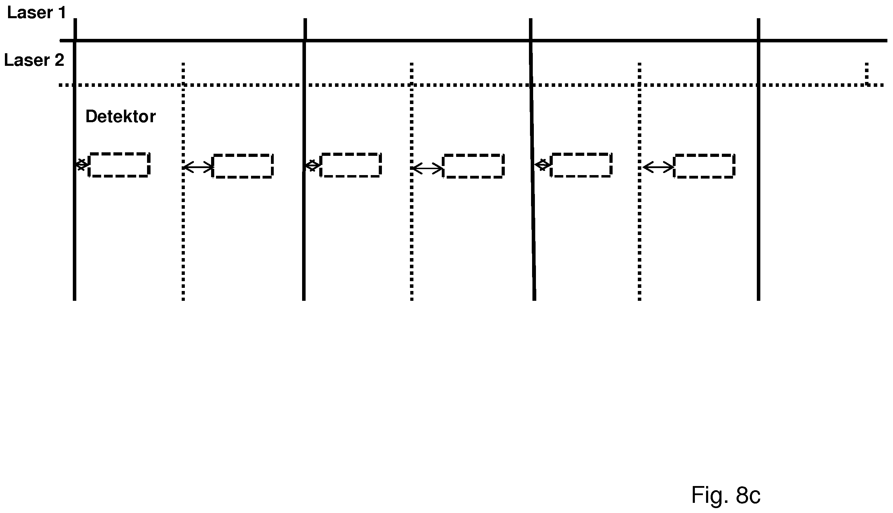

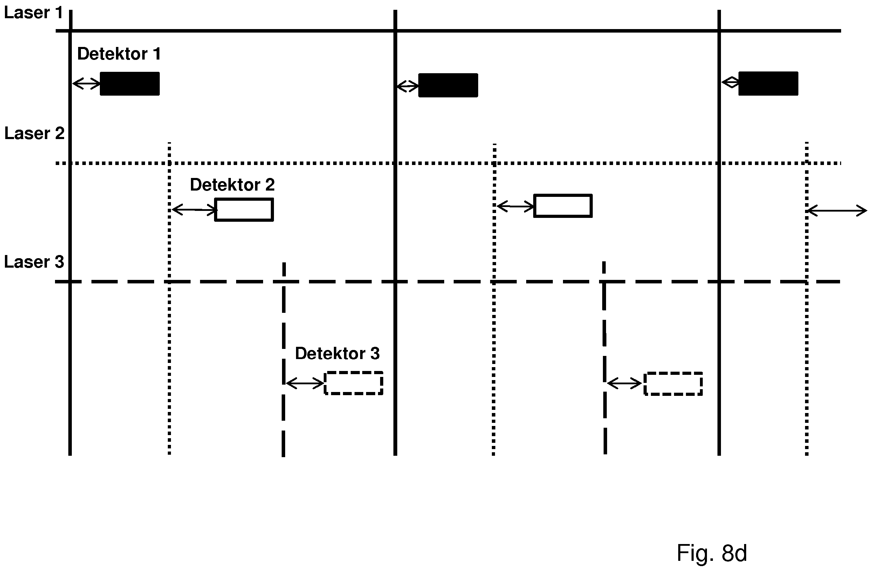

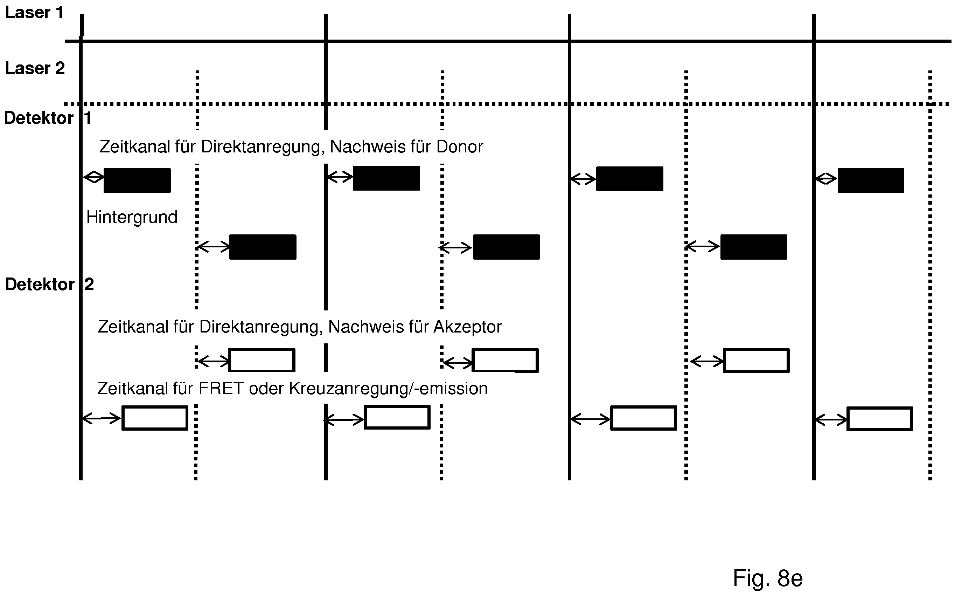

Sind mehrere gepulste Laser am System vorhanden, können diese simultan oder alternierend in einer vom Nutzer wählbaren Sequenz pulsen, d.h. Anregungslicht emittieren. Die vom Nutzer einstellbaren zeitlichen Detektionsfenster der verschiedenen Detektoren können sich alle auf einen Laser beziehen, siehe Fig. 8a. Es ist auch möglich, dass sich die zeitlichen Detektionsfenster verschiedener Detektoren auf verschiedene Laser beziehen, siehe Fig. 8b, oder dass sich die zeitlichen Detektionsfenster eines oder mehrerer Detektoren abwechselnd auf verschiedene Laser beziehen, siehe Fig. 8c. Diese flexible Zuordnung des zeitlichen Bezuges von Laserpuls und zeitlichem Detektionsfenster ermöglicht unter anderem eine sequentielle Datenaufnahme auf Pixelniveau, siehe Fig. 8d. Dadurch können Kreuzanregung und Kreuzemission bei spektral eng beieinander liegenden Fluorochromen auf Hardwareebene voneinander getrennt werden. Gegenüber linien- oder bildweise sequentiellem Scan tritt bei pixelweise sequentieller Datenaufnahme bei sich schnell bewegenden Proben kein Pixelversatz zwischen den einzelnen Detektionskanälen auf. Nimmt man weiterhin auch die Kreuzanregungs- und Kreuzemissionskanäle mit auf, erlaubt die on-line Datenauswertung eine Unterscheidung zwischen "normaler" Kreuzemission und der Emission durch FRET, siehe Fig. 8e. In allen Fig. 8a-8e verläuft die Zeitachse von links nach rechts bzw. bildet die horizontale oder x-Achse die Zeitachse.

Des Weiteren bildet eine Anwendung die Darstellung von Anisotropie-Phänomenen. Anisotropien können zu längeren bzw. kürzeren Zerfallszeiten von Farbstoffen führen. Das dargestellte Verfahren dient zwar nicht zur Quantifizierung der Lebensdauer, aber durch ein einfaches Teilen der kurzlebigen Intensität durch die langlebige Intensität können Lebensdaueränderungen gut sichtbar gemacht werden.

Des Weiteren bildet eine Anwendung das Gated FCS. Bei sehr schwachen FCS-Proben kann Streulicht durch Wasser die Messergebnisse beeinflussen. Dieses Streulicht kann durch die zeitliche Selektion bei den FCS-Messungen leicht identifiziert und für den Detektionskanal unsichtbar gemacht werden. Zusätzlich kann der Einfluss störender Autofluoreszenz durch geeignete Wahl des FCS-Detektionszeitfensters minimiert werden.

Die Separation der Detektion nach zeitlichem Auftreffen der Photonen erfolgt in der dem Detektor nachgeschalteten Elektronik. Grundsätzlich sind sowohl ein paralleler als auch ein sequenzieller Aufbau der Elektronik denkbar.

Bei einem sequenziellen Aufbau werden die von der Lichtquelle emittierten und die von der Detektionseinheit ankommenden Impulse von schnellen seriell-parallel arbeitenden Abtasteinheiten abgetastet. Dabei können die Impulse durch sehr schnelle ADC-Bausteine abgetastet und die Zeitpunkte des Eintreffens der Impulse über entsprechende Verarbeitungsalgorithmen ermittelt werden. Anschließend wird dann die Zeitspanne bzw. werden die Zeitspannen zwischen dem Impuls von der Lichtquelle und dem Impuls oder den Impulsen von der Detektionseinheit ermittelt. Diese Informationen über Zeitdauern können den entsprechenden Zeitabschnitten oder Detektionsfenstern über geeignete Verfahren zugeordnet werden.

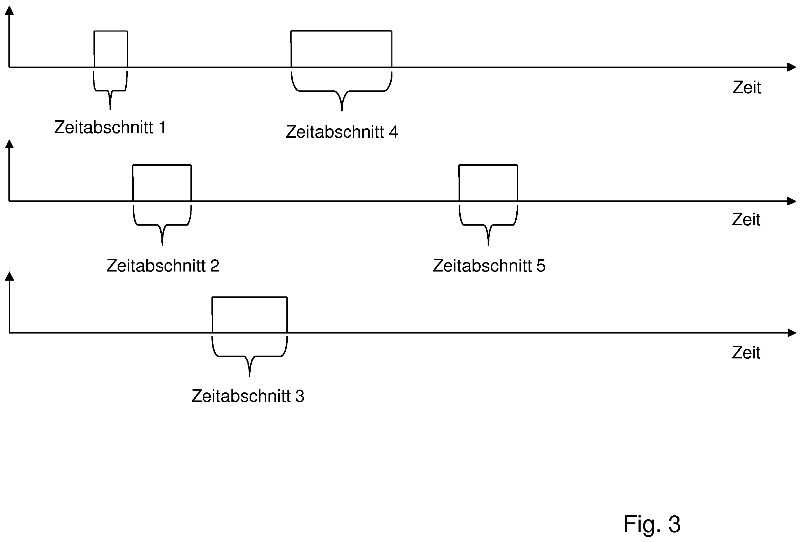

Ein paralleler Aufbau könnte gemäß Fig. 3 realisiert werden. Dabei können die zu detektierenden Zeitabschnitte der Probenemissionen durch elektrische Signale dargestellt werden. Jedem elektrischen Auswertekanal wird oder werden ein oder mehrere Zeitfenster oder Detektionsfenster zugeordnet. Mit Hilfe dieser Auswertekanäle können weitere elektrische Schaltungsteile gesteuert werden, die die Auswertung der Bildinformationen durchführen. Fig. 3 zeigt drei Auswertekanäle mit insgesamt fünf auf die drei Auswertekanäle verteilten Zeitabschnitten oder Detektionsfenstern. Die Anzahl der Auswertekanäle und Zeitabschnitte ist jedoch nicht auf die dargestellte Anzahl begrenzt, sondern ist lediglich beispielhaft gewählt.

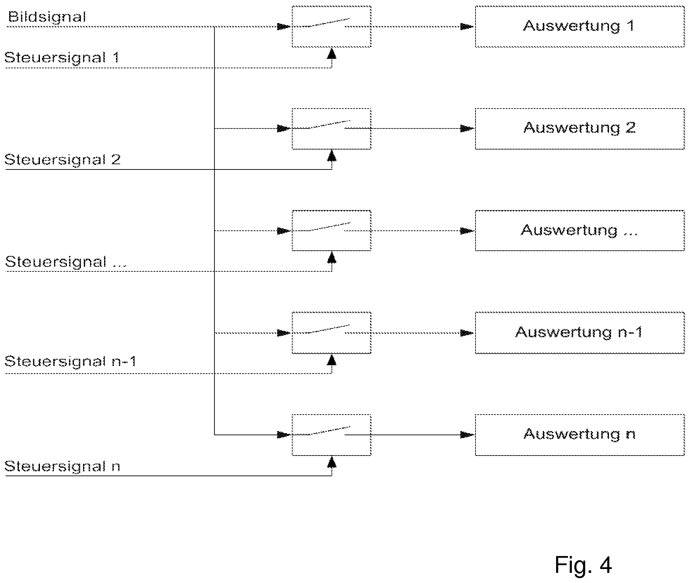

Jeder der abgebildeten Auswertekanäle steuert eine eigene Auswerteelektronik. Jeder Zeitabschnitt startet und stoppt die Auswertung des Detektionssignals oder Konfokalsignals bei der konfokalen Mikroskopie. Hierzu zeigt Fig. 4 ein Beispiel einer parallelen Auswertung, die durch die Steuersignale jeweils aktiviert wird. Bei der dargestellten Anordnung lässt sich ein zuvor festgelegter spektraler Kanal in eine beliebige Zahl Zeitabschnitte zerlegen und diese Zeitabschnitte lassen sich getrennt voneinander auswerten. Für jeden spektralen Detektionskanal wird dabei die gezeigte Anordnung aus Steuerlogik und Auswertung realisiert.

Alternativ kann auch eine invertierte Anwendung erfolgen, die es erlaubt, mit Hilfe der Steuersignale die Auswertung zu stoppen und somit bestimmte Signalanteile gezielt auszublenden.

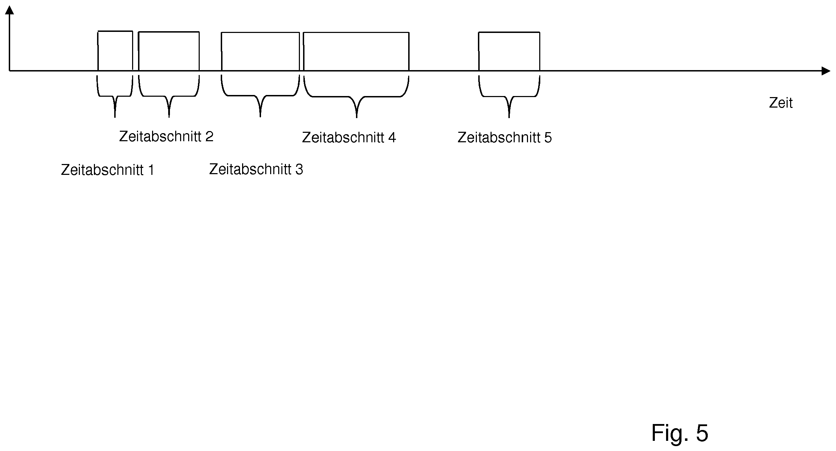

Bei einer seriellen Auswertung kann die Auswertung gemäß Fig. 5 erfolgen. Hierbei existiert nur ein Steuersignal für einen Auswertekanal. Innerhalb dieses Steuersignals werden alle zu detektierenden Zeitabschnitte eingestellt.

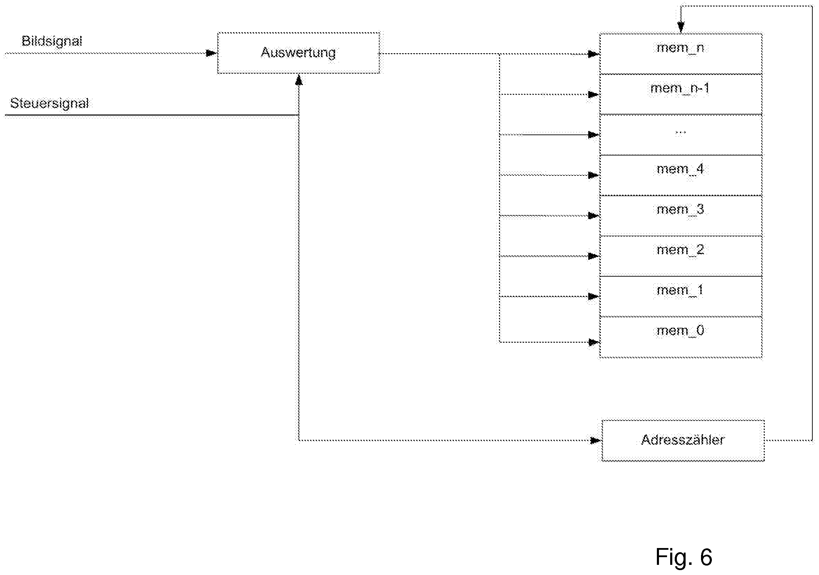

Ein derartiges Steuersignal wird benutzt, um eine Auswerteelektronik zu steuern. Um die getrennte Darstellung der einzelnen Zeitabschnitte während der Bildaufnahme zu realisieren, wird mit jedem Deaktivieren des Steuersignals am Ende eines Zeitabschnitts ein Adresszähler inkrementiert. Der prinzipielle Aufbau der Anordnung ist in Fig. 6 gezeigt. Hier ist die serielle Auswertung und die Inkrementierung des Adresszählers besonders gut erkennbar.

Die ausgewertete Bildinformation für jeden Zeitabschnitt befindet sich durch die Inkrementierung des Adresszählers in einer eigenen Speicherzelle. Sollen mehrere Zeitabschnitte zusammengefasst werden, wie es mit der parallelen Auswertung möglich ist, kann dies durch nachträgliche Verrechnung der Inhalte der zugehörigen Speicherzellen erreicht werden.

Mit einer seriellen Auswertung lässt sich ebenfalls eine Invertierung der Auswertung realisieren, die die gezielte Unterdrückung bestimmter Zeitabschnitte des Bildsignals erlaubt. Dazu wird eine Speicherzelle mit einer Markierung versehen, die es in der nachträglichen Auswertung erlaubt, den Inhalt dieses Zeitabschnitts vom Gesamtbild zu subtrahieren.

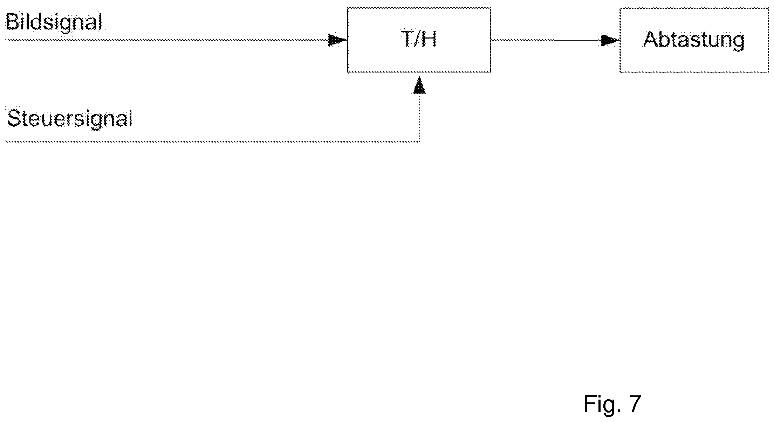

Eine andere Art der Auswertung lässt sich gemäß Fig. 7 mit einer Track-and-Hold-Schaltung realisieren. Dabei wird ein Gating-Signal als serielles Signal dem Clock-Eingang einer Track-and-Hold-Stufe T/H zugeführt.

Mit jedem Start eines Gating-Pulses wird die Akkumulation der Bilddaten in der Track-and-Hold-Stufe gestartet. Am Ende des Zeitfensters wird die im Speicher der Track-and-Hold-Stufe enthaltene Ladung durch einen Analog-Digital-Wandler abgetastet und weiter verarbeitet. Das Ergebnis dieser Art der Signalverarbeitung ist ein über das Gatingintervall integrierter Wert, der proportional der detektierten Photonenzahl ist.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Wellenlängenbereich
- 2: Wellenlängenbereich
- Ch.1: Detektionskanal
- Ch.2: Detektionskanal
- Ch.1.1: Detektionsfenster
- Ch.1.2: Detektionsfenster
- Ch.1.3: Detektionsfenster
- Ch.2.1: Detektionsfenster
- Ch.2.2: Detektionsfenster
- Ch.2.3: Detektionsfenster

## Patentansprüche

1. Mikroskop, insbesondere Konfokalmikroskop, mit einem oder mehreren Lasern zur Erzeugung eines gepulsten Beleuchtungslichts für eine Probe und einer Detektionseinrichtung für Detektionssignale von der Probe zur Bildgebung, wobei die Detektionseinrichtung mehrere zur Detektion vorgebbarer unterschiedlicher Wellenlängenbereiche (1, 2) einstellbare spektrale Detektionskanäle (Ch.1, Ch.2) aufweist, und wobei den spektralen Detektionskanälen (Ch.1, Ch.2) jeweils mehrere zeitliche Detektionsfenster (Ch.1.1, Ch.1.2, Ch.1.3, Ch.2.1, Ch.2.2, Ch.2.3) zugeordnet sind,
**dadurch gekennzeichnet, dass** die den spektralen Detektionskanälen (Ch.1, Ch.2) jeweils zugeordneten mehreren zeitlichen Detektionsfenster (Ch.1.1, Ch.1.2, Ch.1.3, Ch.2.1, Ch.2.2, Ch.2.3) während einer Messung einstellbar sind, so dass der Anwender über die Bildgebung sofort ein visuelles Feedback erhält und noch während der Messung die Einstellungen der Detektionsfenster (Ch.1.1, Ch.1.2, Ch.1.3, Ch.2.1, Ch.2.2, Ch.2.3) optimieren kann.

2. Mikroskop nach Anspruch 1, **dadurch gekennzeichnet, dass** die Wellenlängenbereiche (1, 2) der spektralen Detektionskanäle (Ch.1, Ch.2) während einer Messung einstellbar und/oder darstellbar sind.

3. Mikroskop nach Anspruch 1 oder 2, **dadurch gekennzeichnet, dass** die Wellenlängenbereiche (1, 2) und/oder die zeitlichen Detektionsfenster (Ch.1.1, Ch.1.2, Ch.1.3, Ch.2.1, Ch.2.2, Ch.2.3)jeweils eine unterschiedliche Größe aufweisen.

4. Mikroskop, nach einem der Ansprüche 1 bis 3, **dadurch gekennzeichnet, dass** jedem spektralen Detektionskanal (Ch.1, Ch.2) eine separate Auswerteelektronik oder ein separater Auswertekanal zugeordnet ist oder mehrere separate Auswertekanäle zugeordnet sind, wobei vorzugsweise jedem Auswertekanal ein zeitliches Detektionsfenster (Ch.1.1, Ch.1.2, Ch.1.3, Ch.2.1, Ch.2.2, Ch.2.3) oder mehrere zeitliche Detektionsfenster (Ch.1.1, Ch.1.2, Ch.1.3, Ch.2.1, Ch.2.2, Ch.2.3) zugeordnet ist oder sind.

5. Mikroskop nach Anspruch 4, **dadurch gekennzeichnet, dass** die Auswertung in der Auswerteelektronik, in dem Auswertekanal oder in den Auswertekanälen durch mit den zeitlichen Detektionsfenstern (Ch.1.1, Ch.1.2, Ch.1.3, Ch.2.1, Ch.2.2, Ch.2.3) zeitlich korrelierende Steuersignale aktivierbar oder deaktivierbar ist.

6. Mikroskop nach einem der Ansprüche 1 bis 5, **dadurch gekennzeichnet, dass** zwei oder mehrere zeitliche Detektionsfenster während oder nach einer Datenaufnahme miteinander verrechenbar und vorzugsweise die Ergebnisse der Verrechnung darstellbar sind.

7. Mikroskop nach einem der Ansprüche 1 bis 6, **dadurch gekennzeichnet, dass** unterschiedlichen zeitlichen Detektionsfenstern unterschiedliche Laser zuordenbar sind.

8. Verfahren zur Untersuchung einer Probe mit einem Mikroskop, insbesondere Konfokalmikroskop und insbesondere Mikroskop nach einem der Ansprüche 1 bis 5, wobei das Mikroskop einen oder mehrere Laser zur Erzeugung eines gepulsten Beleuchtungslichts für eine Probe und eine Detektionseinrichtung für Detektionssignale von der Probe zur Bildgebung aufweist und wobei die Detektionseinrichtung mehrere zur Detektion vorgebbarer unterschiedlicher Wellenlängenbereiche (1, 2) einstellbare spektrale Detektionskanäle (Ch.1, Ch.2) aufweist, wobei den spektralen Detektionskanälen (Ch.1, Ch.2) jeweils mehrere zeitliche Detektionsfenster (Ch.1.1, Ch.1.2, Ch.1.3, Ch.2.1, Ch.2.2, Ch.2.3) zugeordnet sind und somit Detektionssignale in den zeitlichen Detektionsfenstern (Ch.1.1, Ch.1.2, Ch.1.3, Ch.2.1, Ch.2.2, Ch.2.3) aufgenommen werden,
**dadurch gekennzeichnet, dass** die den spektralen Detektionskanälen (Ch.1, Ch.2) jeweils zugeordneten mehreren zeitlichen Detektionsfenster (Ch.1.1, Ch.1.2, Ch.1.3, Ch.2.1, Ch.2.2, Ch.2.3) während einer Messung einstellbar sind, so dass der Anwender über die Bildgebung sofort ein visuelles Feedback erhält und noch während der Messung die Einstellungen der Detektionsfenster (Ch.1.1, Ch.1.2, Ch.1.3, Ch.2.1, Ch.2.2, Ch.2.3) optimieren kann.

9. Verfahren nach Anspruch 8, **dadurch gekennzeichnet, dass** eine Auswertung der aufzunehmenden Detektionssignale parallel oder seriell erfolgt.

10. Verfahren nach Anspruch 8 oder 9, **dadurch gekennzeichnet, dass** jedem spektralen Detektionskanal (Ch.1, Ch.2) eine separate Auswerteelektronik oder ein separater Auswertekanal zugeordnet wird oder mehrere separate Auswertekanäle zugeordnet werden, wobei vorzugsweise jedem Auswertekanal ein zeitliches Detektionsfenster (Ch.1.1, Ch.1.2, Ch.1.3, Ch.2.1, Ch.2.2, Ch.2.3) oder mehrere zeitliche Detektionsfenster (Ch.1.1, Ch.1.2, Ch.1.3, Ch.2.1, Ch.2.2, Ch.2.3) zugeordnet wird oder werden.

11. Verfahren nach Anspruch 10, **dadurch gekennzeichnet, dass** die Auswertung in der Auswerteelektronik, in dem Auswertekanal oder in den Auswertekanälen durch mit den zeitlichen Detektionsfenstern (Ch.1.1, Ch.1.2, Ch.1.3, Ch.2.1, Ch.2.2, Ch.2.3) zeitlich korrelierende Steuersignale aktiviert oder deaktiviert wird.

12. Verfahren nach einem der Ansprüche 9 bis 11, **dadurch gekennzeichnet, dass** bei einer seriellen Auswertung bei jedem Deaktivieren des Steuersignals am Ende eines zeitlichen Detektionsfensters (Ch.1.1, Ch.1.2, Ch.1.3, Ch.2.1, Ch.2.2, Ch.2.3) ein Adresszähler inkrementiert wird.

13. Verfahren nach einem der Ansprüche 8 bis 12, **dadurch gekennzeichnet, dass** jede eine ausgewertete Bildinformation eines zeitlichen Detektionsfensters (Ch.1.1, Ch.1.2, Ch.1.3, Ch.2.1, Ch.2.2, Ch.2.3) enthaltende Speicherzelle mit einer individuell vorgebbaren Markierung versehen wird.

14. Verfahren nach Anspruch 8, **dadurch gekennzeichnet, dass** eine Auswertung der aufzunehmenden Detektionssignale mittels einer Track-and-Hold-Schaltung erfolgt, wobei mit jedem Start eines Gating-Pulses eine Datenakkumulation gestartet wird.

15. Verfahren nach einem der Ansprüche 8 bis 14, **dadurch gekennzeichnet, dass** zwei oder mehrere zeitliche Detektionsfenster während oder nach der Datenaufnahme miteinander verrechnet werden und vorzugsweise die Ergebnisse der Verrechnung dargestellt werden.

16. Verfahren nach einem der Ansprüche 8 bis 15, **dadurch gekennzeichnet, dass** unterschiedlichen zeitlichen Detektionsfenstern unterschiedliche Laser zugeordnet werden.

## Claims

1. A microscope, in particular confocal microscope, with one or more lasers for generating pulsed illumination light for a sample and a detection device for detection signals from the sample for imaging, wherein the detection device has a plurality of spectral detection channels (Ch.1, Ch.2) which can be set for the detection of predeterminable different wavelength ranges (1, 2), and wherein the spectral detection channels (Ch.1, Ch.2) are each assigned a plurality of temporal detection windows (Ch.1.1, Ch.1.2, Ch.1.3, Ch.2.1, Ch.2.2, Ch.2.3), **characterized in that** the plurality of temporal detection windows (Ch.1.1, Ch.1.2, Ch.1.3, Ch.2.1, Ch.2.2, Ch.2.3) respectively assigned to the spectral detection channels (Ch.1, Ch.2) are adjustable during a measurement so that the user receives immediate visual feedback on the imaging and can optimize the settings of the detection windows (Ch.1.1, Ch.1.2, Ch.1.3, Ch.2.1, Ch.2.2, Ch.2.3) still during the measurement.

2. The microscope according to claim 1, **characterized in that** the wavelength ranges (1, 2) of the spectral detection channels (Ch.1, Ch.2) are adjustable and/or displayable during a measurement.

3. The microscope according to claim 1 or 2, **characterized in that** the wavelength ranges (1, 2) and/or the temporal detection windows (Ch.1.1, Ch.1.2, Ch.1.3, Ch.2.1, Ch.2.2, Ch.2.3) each have a different size.

4. The microscope according to one of claims 1 to 3, **characterized in that** each spectral detection channel (Ch.1, Ch.2) is assigned a separate evaluation electronics or a separate evaluation channel, or a plurality of separate evaluation channels are assigned, preferably each evaluation channel having a temporal detection window (Ch.1.1, Ch.1.2, Ch.1.3, Ch.2.1, Ch.2.2, Ch.2.3) or a plurality of temporal detection windows (Ch.1.1, Ch.1.2, Ch.1.3, Ch.2.1, Ch.2.2, Ch.2.3) assigned.

5. The microscope according to claim 4, **characterized in that** the evaluation in the evaluation electronics, in the evaluation channel or in the evaluation channels can be activated or deactivated by control signals correlating in time with the temporal detection windows (Ch.1.1, Ch.1.2, Ch.1.3, Ch.2.1, Ch.2.2, Ch.2.3).

6. The microscope according to one of claims 1 to 5, **characterized in that** two or more temporal detection windows can be offset against each other during or after a data acquisition and preferably the results of the offset can be displayed.

7. The microscope according to one of claims 1 to 6, **characterized in that** different lasers can be assigned to different temporal detection windows.

8. A method for examining a sample with a microscope, in particular a confocal microscope and in particular a microscope according to one of claims 1 to 5, wherein the microscope has one or more lasers for generating a pulsed illumination light for a sample and a detection device for detection signals from the sample for imaging, and wherein the detection device has a plurality of spectral detection channels (Ch.1, Ch.2) which can be set for the detection of predeterminable different wavelength ranges (1, 2), the spectral detection channels (Ch.1, Ch.2) each being assigned a plurality of temporal detection windows (Ch.1.1, Ch.1.2, Ch.1.3, Ch.2.1, Ch.2.2, Ch.2.3) and detection signals thus being recorded in the temporal detection windows (Ch.1.1, Ch.1.2, Ch.1.3, Ch.2.1, Ch.2.2, Ch.2.3),
**characterized in that** the plurality of temporal detection windows (Ch.1.1, Ch.1.2, Ch.1.3, Ch.2.1, Ch.2.2, Ch.2.3) respectively assigned to the spectral detection channels (Ch.1, Ch.2) are adjustable during a measurement so that the user receives immediate visual feedback on the imaging and can still optimize the settings of the detection windows (Ch.1.1, Ch.1.2, Ch.1.3, Ch.2.1, Ch.2.2, Ch.2.3) still during the measurement.

9. The method according to claim 8, **characterized in that** the detection signals to be recorded are evaluated in parallel or serially.

10. The method according to claim 8 or 9, **characterized in that** each spectral detection channel (Ch.1, Ch.2) is assigned a separate evaluation electronics or a separate evaluation channel, or a plurality of separate evaluation channels are assigned, preferably each evaluation channel having a temporal detection window (Ch.1.1, Ch.1.2, Ch.1.3, Ch.2.1, Ch.2.2, Ch.2.3) or several temporal detection windows (Ch.1.1, Ch.1.2, Ch.1.3, Ch.2.1, Ch.2.2, Ch.2.3) assigned.

11. The method according to claim 10, **characterized in that** the evaluation in the evaluation electronics, in the evaluation channel or in the evaluation channels is activated or deactivated by control signals correlating in time with the temporal detection windows (Ch.1.1, Ch.1.2, Ch.1.3, Ch.2.1, Ch.2.2, Ch.2.3).

12. The method according to any one of claims 9 to 11, **characterized in that**, in a serial evaluation, an address counter is incremented each time the control signal is deactivated at the end of a temporal detection window (Ch.1.1, Ch.1.2, Ch.1.3, Ch.2.1, Ch.2.2, Ch.2.3).

13. The method according to one of claims 8 to 12, **characterized in that** each memory cell containing an evaluated image information of a temporal detection window (Ch.1.1, Ch.1.2, Ch.1.3, Ch.2.1, Ch.2.2, Ch.2.3) is provided with an individually predeterminable marking.

14. The method according to claim 8, **characterized in that** the detection signals to be recorded are evaluated by means of a track-and-hold circuit, with each start of a gating pulse starting a data accumulation.

15. The method according to one of claims 8 to 14, **characterized in that** two or more temporal detection windows are offset against each other during or after the data acquisition and preferably the results of the offset are displayed.

16. The method according to one of claims 8 to 15, **characterized in that** different lasers are assigned to different temporal detection windows.

## Revendications

1. Microscope, notamment microscope confocal, avec un ou plusieurs lasers destinés à produire une lumière d'éclairage pulsée pour un échantillon et avec un dispositif de détection de signaux de détection provenant de l'échantillon pour de l'imagerie, dans lequel le dispositif de détection comporte plusieurs canaux de détection spectraux (Ch.1, Ch.2) pouvant être réglés pour détecter différentes plages de longueurs d'onde prédéfinissables (1, 2) et dans lequel de multiples fenêtres de détection temporelles (Ch. 1.1, Ch.1.2, Ch.1.3, Ch.2.1, Ch.2.2, Ch.2.3 sont respectivement associées aux canaux de détection spectraux (Ch.1, Ch.2)), **caractérisé en ce que** les multiples fenêtres de détection temporelles (Ch.1.1, Ch.1.2, Ch.1.3, Ch.2.1, Ch.2.2, Ch.2.3) respectivement associées aux canaux de détection spectraux (Ch.1, Ch.2) peuvent être réglées pendant une mesure, de sorte que l'utilisateur obtienne immédiatement un retour visuel via l'imagerie et puisse encore optimiser les réglages des fenêtres de détection (Ch.1.1, Ch.1.2, Ch.1.3, Ch.2.1, Ch.2.2, Ch.2.3) pendant la mesure.

2. Microscope selon la revendication 1, **caractérisé en ce que** les plages de longueurs d'onde (1,2) des canaux de détection spectraux (Ch.1, Ch.2) peuvent être réglées et/ou représentées pendant une mesure.

3. Microscope selon la revendication 1 ou 2, **caractérisé en ce que** les plages de longueurs d'onde (1, 2) et/ou les fenêtres de détection temporelles (Ch.1.1, Ch.1.2, Ch.1.3, Ch.2.1, Ch.2.2, Ch.2.3) présentent respectivement une dimension différente.

4. Microscope selon l'une quelconque des revendications 1 à 3, **caractérisé en ce qu'**un système électronique d'analyse séparé ou un canal d'analyse séparé est associé à chaque canal de détection spectral (Ch.1, Ch.2) ou que plusieurs canaux d'analyse séparés sont associés à eux, dans lequel de préférence une fenêtre de détection temporelle (Ch.1.1, Ch.1.2, Ch.1.3, Ch.2.1, Ch.2.2, Ch.2.3) ou plusieurs fenêtres de détection temporelles (Ch.1.1, Ch.1.2, Ch.1.3, Ch.2.1, Ch.2.2, Ch.2.3) est ou sont associées à chaque canal d'analyse.

5. Microscope selon la revendication 4, **caractérisé en ce que** l'analyse dans le système électronique d'analyse peut être activée ou désactivée dans le canal d'analyse ou dans les canaux d'analyse au travers des signaux de commande en corrélation temporelle avec les fenêtres de détection temporelles (Ch.1.1, Ch.1.2, Ch.1.3, Ch.2.1, Ch.2.2, Ch.2.3).

6. Microscope selon l'une quelconque des revendications 1 à 5, **caractérisé en ce que** deux ou plusieurs fenêtres de détection temporelles peuvent être prises en compte ensemble pendant ou après une prise de données et que les résultats de la prise en compte sont de préférence représentables.

7. Microscope selon l'une quelconque des revendications 1 à 6, **caractérisé en ce que** différentes fenêtres de détection temporelles peuvent être associées à différents lasers.

8. Procédé d'examen d'un échantillon à l'aide d'un microscope, notamment d'un microscope confocal et notamment d'un microscope selon l'une quelconque des revendications 1 à 5, dans lequel le microscope comporte un ou plusieurs lasers pour produire une lumière d'éclairage pulsée pour un échantillon et un dispositif de détection pour les signaux de détection provenant de l'échantillon pour de l'imagerie et dans lequel le dispositif de détection comporte plusieurs canaux de détection spectraux (Ch.1, Ch.2) pouvant être réglés pour détecter différentes plages de longueurs d'onde prédéfinissables (1, 2), dans lequel plusieurs fenêtres de détection temporelles (Ch.1.1, Ch.1.2, Ch.1.3, Ch.2.1, Ch.2.2, Ch.2.3) sont respectivement associées aux canaux de détection spectraux (Ch.1, Ch.2) et reçoivent ainsi les signaux de détection dans les fenêtres de détection temporelles (Ch.1.1, Ch.1.2, Ch.1.3, Ch.2.1, Ch.2.2, Ch.2.3), **caractérisé en ce que** les multiples fenêtres de détection temporelles (Ch.1.1, Ch.1.2, Ch.1.3, Ch.2.1, Ch.2.2, Ch.2.3) respectivement associées aux canaux de détection spectraux (Ch.1, Ch.2) peuvent être réglées pendant une mesure, de sorte que l'utilisateur obtienne aussitôt un retour visuel via l'imagerie et puisse encore optimiser les réglages des fenêtres de détection (Ch.1.1, Ch.1.2, Ch.1.3, Ch.2.1, Ch.2.2, Ch.2.3) pendant la mesure.

9. Procédé selon la revendication 8, **caractérisé en ce qu'**une analyse des signaux de détection à recevoir s'effectue en parallèle ou en série.

10. Procédé selon la revendication 8 ou 9, **caractérisé en ce qu'**un système électronique d'analyse séparé ou un canal d'analyse séparé est associé à chaque canal de détection spectral (Ch.1, Ch.2) ou que plusieurs canaux d'analyse séparés sont associés à eux, dans lequel une fenêtre de détection temporelle (Ch.1.1, Ch.1.2, Ch.1.3, Ch.2.1, Ch.2.2, Ch.2.3) ou plusieurs fenêtres de détection temporelles (Ch.1.1, Ch.1.2, Ch.1.3, Ch.2.1, Ch.2.2, Ch.2.3) est ou sont de préférence associées à chaque canal d'analyse.

11. Procédé selon la revendication 10, **caractérisé en ce que** l'analyse réalisée dans le système électronique d'analyse est activée ou désactivée dans le canal d'analyse ou dans les canaux d'analyse au travers des signaux de commande en corrélation temporelle avec les fenêtres de détection temporelles (Ch.1.1, Ch.1.2, Ch.1.3, Ch.2.1, Ch.2.2, Ch.2.3).

12. Procédé selon l'une quelconque des revendications 9 à 11, **caractérisé en ce qu'**en cas d'analyse sérielle, un compteur d'adresse est incrémenté à chaque désactivation du signal de commande à la fin d'une fenêtre de détection temporelle (Ch.1.1, Ch.1.2, Ch.1.3, Ch.2.1, Ch.2.2, Ch.2.3) .

13. Procédé selon l'une quelconque des revendications 8 à 12, **caractérisé en ce que** chaque cellule de mémoire, contenant une information d'image analysée, d'une fenêtre de détection temporelle (Ch.1.1, Ch.1.2, Ch.1.3, Ch.2.1, Ch.2.2, Ch.2.3) est pourvue d'un marquage pouvant être prédéfini de façon individuelle.

14. Procédé selon la revendication 8, **caractérisé en ce qu'**une analyse des signaux de détection à recevoir s'effectue au moyen d'un circuit de type échantillonneur-bloqueur (track and hold en anglais), dans lequel une accumulation de données est entamée à chaque démarrage d'impulsion de déclenchement (gating en anglais).

15. Procédé selon l'une quelconque des revendications 8 à 14, **caractérisé en ce que** deux ou plusieurs fenêtres de détection temporelles sont prises en compte ensemble pendant ou après la réception des données et que les résultats de la prise en compte sont de préférence représentés.

16. Procédé selon l'une quelconque des revendications 8 à 15, **caractérisé en ce que** différents lasers sont associés à différentes fenêtres de détection temporelles.
